# EUROPÄISCHE PATENTSCHRIFT

(11) **EP 2 111 662 B1**
(45) Veröffentlichungstag und Bekanntmachung des Hinweises auf die Patenterteilung: **09.10.2013**
(21) Anmeldenummer: 07846980.6
(22) Anmeldetag: 04.12.2007
(51) Int. Cl.: H01M 8/10, B29C 45/14, B29L 31/34, B29L 31/26, H01M 8/24, H01M 8/02

(54) **DICHTUNGSANORDNUNG FÜR EIN PLATTENELEMENT EINER BRENNSTOFFZELLE**
SEALING ARRANGEMENT FOR A PLATE ELEMENT OF A FUEL CELL
DISPOSITIF D'ÉTANCHÉITÉ POUR ÉLÉMENT DE PLAQUE D'UNE PILE À COMBUSTIBLE

(30) Priorität: 16.01.2007 DE 102007003096
(43) Veröffentlichungstag der Anmeldung: 28.10.2009
(73) Patentinhaber: Carl Freudenberg KG, 69469 Weinheim (DE)
(72) Erfinder: GERDING, Lars, 67663 Kaiserslautern (DE); WOLF, Joachim, 25449 Helsingborg (SE)
(86) Internationale Anmeldenummer: PCT/EP2007/010498
(87) Internationale Veröffentlichungsnummer: WO 2008/086841

(56) Entgegenhaltungen:
- EP-A- 1 152 477
- WO-A-2004/114451
- DE-A1- 10 048 331
- US-A1- 2003 129 474
- US-A1- 2005 089 745
- US-A1- 2006 035 134

## Beschreibung

### Technisches Gebiet

Die Erfindung betrifft eine Dichtungsanordnung eines Plattenelements einer Brennstoffzelle, wobei das Plattenelement eine Kanalstruktur aufweist, welche teilweise durch zumindest ein Einlegeelement überdeckt ist sowie ein Dichtelement.

### Stand der Technik

Derartige Dichtungsanordnungen sind aus der US 2006/0035134 A1 bekannt. Dort ist ein als Bipolarplatte ausgebildetes Plattenelement gezeigt, welches eine Kanalstruktur aufweist durch die die Reaktionsgase und Kühlmittel geleitet werden. Die Bipolarplatten müssen gegenüber der Umgebung abgedichtet werden, wobei die Zu- und Abfuhr von Reaktionsgasen gewährleistet sein muss. Die Abdichtung erfolgt durch Dichtelemente, die als separate Bauelemente ausgeführt sein können. Die Kanalstruktur wird in den Bereichen, in denen ein Dichtelement vorgesehen ist, durch ein Einlegeelement abgedeckt. Derartige Einlegeelemente sind meist formschlüssig in den Plattenelementen gehalten. Die Einlegeelemente verhindern, dass das Dichtelement in einen Kanal verdrängt wird und dadurch einen Kanal verschließt. Des Weiteren überbrücken die Einlegeelemente die Kanäle, so dass sich eine konstante Kontaktspannung ergibt und dadurch eine gleichmäßige Dichtwirkung des Dichtelementes erzielt wird. Zur Montage der Plattenelemente werden zunächst die Einlageelemente in dafür vorgesehene Vertiefungen der Plattenelemente angeordnet und danach erfolgt die Montage der Dichtelemente.

Die Druckschrift DE 100 48 331 A1 offenbart eine Brennstoffzelle mit Membranelementen, bei denen jeweils eine Feststoffpolymerelektrolytmembran schichtweise zwischen zwei Elektroden angeordnet ist. Ein Umfangsabschnitt der Feststoffpolymerelektrolytmembran ist mit einer Dichtung aus einem elastischen Material versehen, die durch Spritzgießen ausgebildet ist. Die Dichtung definiert Kanäle zum Transport von Brennstoff und Luft. Nahe den Kanälen sind Deckelabschnitte vorgesehen, die mit der Dichtung verklebt sind und die in einer Ausnehmung einer Trenneinrichtung, die jeweils zwei Membranelemente voreinander trennt, angeordnet ist. Das Deckelelement ist zwischen einem Kanal und den Elektroden angeordnet und umgibt den Kanal nicht.

Die Druckschrift US 2005/0089745 A1 offenbart eine Dichtungsanordnung für eine Brennstoffzelle. Die Dichtungen sind mit Trennplatten mit Hilfe von Brückenelementen verbunden, wobei die Dichtungselemente auch mit dem Trennelement verklebt oder integral ausgeformt sein können.

Aus der Druckschrift US 2006/0035134 A1 ist eine Dichtungsanordnung für eine Brennstoffizelle bekannt, bei der die Dichtung auf einem Brennelement angeordnet ist und einen Durchlasskanal umgibt. Die Dichtung kann getrennt von den Trennelementen ausgebildet sein und ein Substrat aufweisen, mit dem es verklebt sein kann.

### Darstellung der Erfindung

Der Erfindung liegt die Aufgabe zugrunde, die Dichtungsanordnung so weiterzuentwickeln, dass die Montage der Plattenelemente vereinfacht ist.

Diese Aufgabe wird mit den Merkmalen der Ansprüche 1 und 7 gelöst. Auf vorteilhafte Ausgestaltungen nehmen die Unteransprüche Bezug.

Zur Lösung der Aufgabe ist das Einlegeelement mit dem Dichtelement verbunden. Dadurch können Einlegeelement und Dichtelement gleichzeitig montiert werden und ein vorheriges Anordnen und Fixieren der Einlegeelemente kann entfallen. Des Weiteren sind die erforderliche Stückzahl an Einlegeelementen an den vorhergesehenen Stellen fest mit dem Dichtelementen verbunden, wodurch die Qualitätssicherung verbessert wird, da bei der Montage kein Einlegeelement vergessen oder an einer falschen Stelle angeordnet werden kann. Das Dichtelement ist mit einer Gasdiffusionslage oder mit einer Membran verbunden. Das Plattenelement ist vorzugsweise als Bipolarplatte ausgebildet. In einer Bipolarplatte sind für den Stofftransport von Reaktionsmedien und Kühlmitteln eine Vielzahl von Kanälen angeordnet. In den durch Dichtelemente abgedeckten Bereichen wird die Durchlässigkeit der Kanäle durch die Einlegelemente gesichert. Diese Einlegeelemente können aus einem metallischen Werkstoff oder einem anderen dafür geeigneten Material bestehen. Die Einlegeelemente können insbesondere auch aus einem Compound bestehend aus einem metallischen Werkstoff und einem Kunststoff bestehen. Die Einlegeelemente bewirken eine gleichmäßige Kontaktspannung der aneinander gefügten Bipolarplatten und dadurch eine gleichmäßige Dichtwirkung des zwischen den Bipolarplatten angeordneten Dichtelementes.

Das Einlegeelement kann stoffschlüssig mit dem Dichtelement verbunden sein. Der Stoffschluss kann durch einen Formgebungsprozess des Dichtungswerkstoffs oder durch eine adhäsive Verbindung, beispielsweise einer Klebeverbindung, hergestellt werden. Bei der Anbindung im Formgebungsprozess kann das Verbundteil, bestehend aus Dichtelement und Einlegeelementen in einem Arbeitsgang hergestellt werden.

Das Dichtelement kann ein Spritzgießteil sein. Spritzgießen ermöglicht ein kostengünstiges Herstellen von Dichtelementen in einer großen Stückzahl und Formenvielfalt. Dabei werden als Werkstoff für das Dichtelement spritzgießfähige Werkstoffe eingesetzt, die auch für den Einsatz in einer Brennstoffzelle geeignet sind. Denkbare Werkstoffe sind Silikone, FKM (Fluorelastomer), EPDM (Ethylen-Propylen-Dien-Monomer), PIB (Polyisobutylen), PU (Polyurethan), BR (Butadien) oder Mischungen hieraus. Durch die Mischung lassen sich gezielt die vorteilhaften Eigenschaften der einzelnen Werkstoffe kombinieren. Fluorelastomere zeichnen sich durch eine gute Temperatur- und Chemikalienbeständigkeit aus, die sich in der Brennstoffzellenumgebung als besonders vorteilhaft erweisen. In anderen Ausgestaltungen sind auch thermoplastische Werkstoffe, beispielsweise thermoplastische Elastomere (TPE) als Dichtungswerkstoff denkbar. Letztere weisen insbesondere den Vorteil auf, dass sie sich wie thermoplastische Materialien in kurzen Taktzeiten verarbeiten lassen.

Das Dichtelement kann mit einer Gasdiffusionslage verbunden sein. Dadurch ergibt sich ein Verbundteil bestehend aus Dichtelement, Einlegeelementen und Gasdiffusionslage und eine Erhöhung der Steifigkeit der Gasdiffusionslage und damit ein verbessertes Handling. Bei dieser Ausgestaltung vereinfacht sich darüber hinaus auch die Anordnung der Gasdiffusionslage, da das Verbundteil mittels der Einlegeelemente formschlüssig auf den Bipolarplatten angeordnet werden kann. Die Gasdiffusionslage ist dadurch automatisch lagerichtig montiert.

Das Dichtelement kann stoffschlüssig mit der Gasdiffusionslage verbunden sein. Bevorzugt wird das Dichtelement im Spritzgießverfahren hergestellt. Dabei wird die Gasdiffusionslage und die Einlegeelemente in dem Spritzgießwerkzeug angeordnet und der Werkstoff des Dichtelementes dringt beim Spritzgießen in die Gasdiffusionslage ein und es ergibt sich eine verliersichere stoffschlüssige Verbindung von Dichtelement und Gasdiffusionslage.

Das Dichtelement kann mit einer Membran verbunden sein. Bei dieser Ausgestaltung ergibt sich ein Verbundteil bestehend aus Dichtelement, Einlegeelemente und Membran und es erfolgt eine Erhöhung der Steifigkeit der Membran. Die Herstellung dieser Ausgestaltung erfolgt analog zu der Herstellung des Verbundteils mit der Gasdiffusionslage.

Das Dichtelement kann mit zwei Gasdiffusionslagen verbunden sein, wobei zwischen den Gasdiffusionslagen eine Membran vorgesehen ist. Eine derartige Anordnung bildet eine Membran-Elektroden-Anordnung, die in dieser Ausgestaltung durch das Dichtelement ein integriertes Verbundteil bildet, welches einfach montierbar ist.

In einer anderen Ausgestaltung kann die Dichtungsanordnung mit zumindest einem als Bipolarplatte ausgebildeten Plattenelement formschlüssig verbunden sein. Dabei ist das Dichtelement gemeinsam mit den Einlegeelementen fest mit der Bipolarplatte verbunden und es vereinfacht sich ebenfalls die Montage.

Verwendung der Dichtungsanordnung nach einem der vorherigen Ansprüche in einer PEM-Brennstoffzelle. PEM-Brennstoffzellen bestehen aus einer Vielzahl von Platten die stapelweise aneinander gefügt sind. Dabei ist es erforderlich, die Platten gegenüber der Umgebung abzudichten. Dies kann besonders vorteilhaft mit dem erfindungsgemäßen Dichtelement erfolgen.

Eine einfache Verbindung von Einlegeelement und Gasdiffusionsanlage ist möglich durch ein Verfahren zur Herstellung einer Baugruppe, bestehend aus zumindest einer Gasdiffusionslage und zumindest einem Einlegeelement bei dem die zumindest eine Gasdiffusionslage und das zumindest eine Einlegeelement in ein Spritzgießwerkzeug eingelegt werden und der Werkstoff des Dichtelements eingespritzt wird, so dass die zumindest eine Gasdiffusionslage und das zumindest eine Einlegeelement miteinander verbunden werden. Das Verfahren ermöglicht eine einfache Verbindung von Einlegeelement und Gasdiffusionslage mit wenigen integrierten Arbeitsschritten.

### Kurzbeschreibung der Zeichnung

Einige Ausführungsbeispiele der erfindungsgemäßen Dichtungsanordnung werden nachfolgend anhand der Figuren näher beschrieben. Diese zeigen, jeweils schematisch:
- Fig. 1: eine PEM Brennstoffzelle im Querschnitt mit erfindungsgemäßer Dichtungsanordnung;
- Fig. 2: ein Plattenelement mit Kanalstruktur und Einlegeelement in der Draufsicht;
- Fig. 3: eine PEM Brennstoffzelle im Querschnitt mit erfindungsgemäßer Dichtungsanordnung nach erfolgter Montage.

### Ausführung der Erfindung

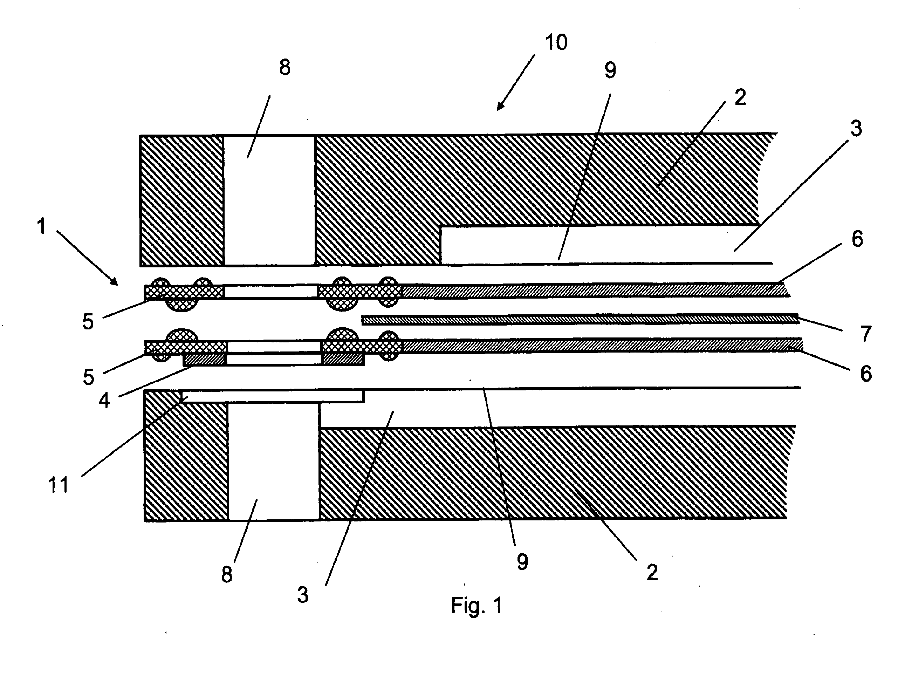

Figur 1 zeigt eine Anordnung 10 einer PEM-Brennstoffzelle bestehend aus Plattenelementen 2, hier zwei Bipolarplatten aus graphitischem Werkstoff zwischen denen zwei Gasdiffusionslagen 6, bestehend aus einem leitfähigen Vliesstoff angeordnet sind. Zwischen den Gasdiffusionslagen 6 ist wiederum eine Membran 7 angeordnet. Den Gasdiffusionslagen 6 ist eine Dichtungsanordnung 1 zugeordnet.

Dazu sind an die Gasdiffusionslagen 6 Dichtelemente 5 angespritzt. Der Werkstoff des Dichtelementes 5, hier EPDM, ist durch den Spritzgießprozess teilweise in das Material der Gasdiffusionslagen 6 eingedrungen und ist dadurch stoffschlüssig mit diesen verbunden. Die Plattenelemente 2 weisen auf den den Gasdiffusionslagen 6 zugewandten Seiten 9 jeweils eine Kanalstruktur 3 auf. Diese Kanalstruktur 3 ist strömungsleitend mit Durchbrechungen 8 verbunden. Die Kanalstruktur 3 und die Durchbrechungen 8 dienen dem Stofftransport, beispielsweise der Reaktionsgase oder dem Kühlmittel. In ein Plattenelement 2 ist auf der Seite 9 eine Ausnehmung 11 angeordnet, die der Durchbrechung 8 zugeordnet ist. In dieser Ausnehmung 11 ist ein ringförmiges Einlegelement 4 angeordnet, welches die Kanalstruktur 3 an dieser Stelle überdeckt und dabei die Durchbrechung 8 umgibt. Das Einlegeelement 4 besteht aus einem biegesteifen metallischen Werkstoff und ist stoffschlüssig mit dem Dichtelement 5 verbunden. Dazu wird das Einlegeelement 4 in dem Spritzgießwerkzeug angeordnet und durch das Spritzgießen ergibt sich die stoffschlüssige Verbindung. In einer anderen Ausgestaltung kann das Dichtelement auch mit der Membran 7 verbunden sein.

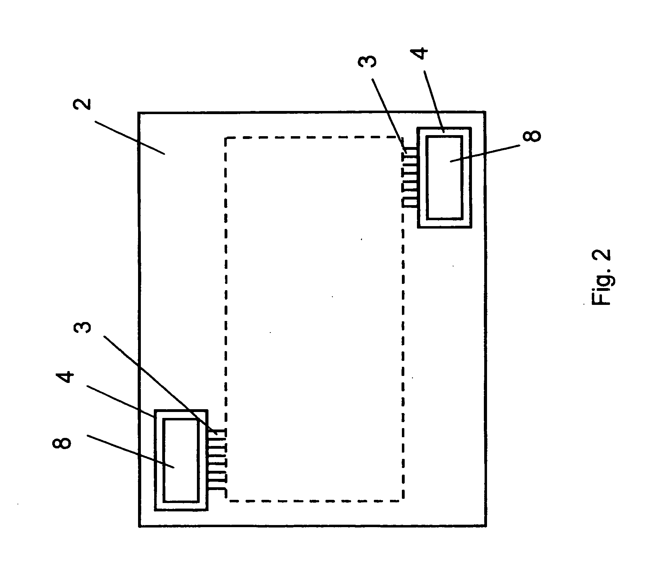

Figur 2 zeigt das Plattenelement 2 mit der Kanalstruktur 3, welche strömungsleitend mit der Durchbrechung 8 verbunden ist, wobei das Einlegelement 4 die Durchbrechung 8 umgibt und die Kanalstruktur 3 dabei teilweise abdeckt.

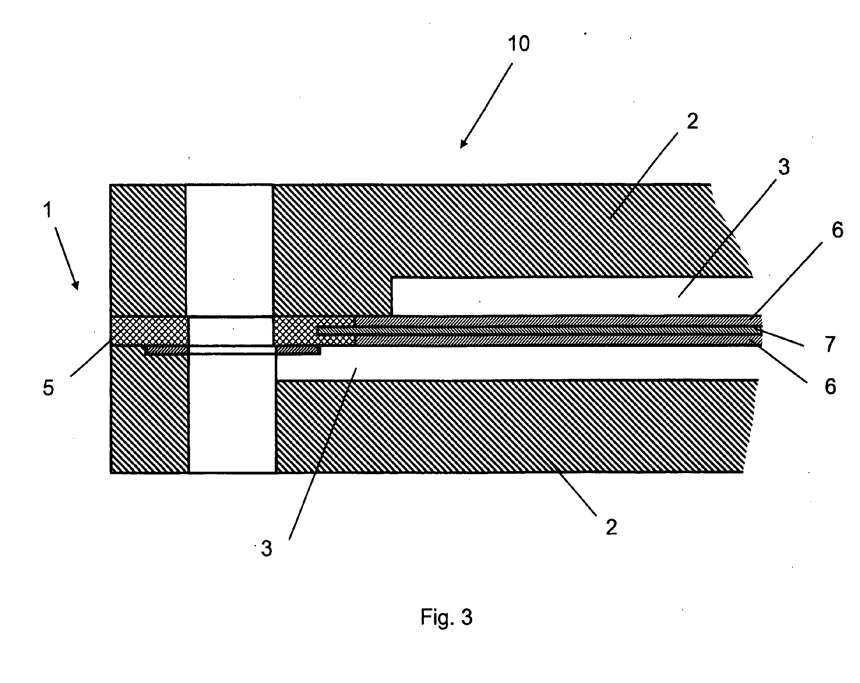

Figur 3 zeigt eine Anordnung 10 gemäß Figur 1, wobei beide Gasdiffusionslagen 6 durch ein Dichtelement 5 miteinander verbunden sind. Das Dichtelement 5 umschließt in dieser Ausgestaltung die Membran 7, wobei das Dichtelement 5 stoffschlüssig mit den beiden Gasdiffusionslagen 6 verbunden ist.

## Patentansprüche

1. Dichtungsanordnung (1) eines Plattenelements (2) einer Brennstoffzelle, wobei das Plattenelement (2) eine Kanalstruktur (3) aufweist die mit zumindest einer Durchbrechung (8) verbunden sind, wobei die Kanalstruktur (3) teilweise durch zumindest ein Einlegeelement (4) überdeckt ist, wobei das Einlegeelement (4) die Durchbrechung umgibt sowie zumindest ein Dichtelement (5), wobei das Einlegeelement (4) mit dem Dichtelement (5) haftend verbunden ist, wobei das Einlegelement (4) in einer Ausnehmung des Plattenelementes (2), die der Durchbrechung zugeordnet ist, angeordnet ist, und dass das Dichtelement (5) mit dem Plattenelement (2) über das Einlegeelement (4) formschlüssig verbunden ist, **dadurch gekennzeichnet, dass** das Dichtelement (5) mit einer Gasdiffusionslage (6) oder mit einer Membran (7) verbunden ist.

2. Dichtungsanordnung nach Anspruch 1, **dadurch gekennzeichnet, dass** das Plattenelement (2) als Bipolarplatte ausgebildet ist.

3. Dichtungsanordnung nach Anspruch 1 oder 2, **dadurch gekennzeichnet, dass** das Einlegeelement (4) stoffschlüssig mit dem Dichtelement (5) verbunden ist.

4. Dichtungsanordnung nach einem der Ansprüche 1 bis 3, **dadurch gekennzeichnet, dass** das Dichtelement (5) ein Spritzgiessteil ist.

5. Dichtungsanordnung nach einem der Ansprüche 1 bis 4, **dadurch gekennzeichnet, dass** das Dichtelement (5) stoffschlüssig mit der Gasdiffusionslage (6) verbunden ist.

6. Dichtungsanordnung nach einem der Ansprüche 1 bis 5, **dadurch gekennzeichnet, dass** das Dichtelement (5) mit zwei Gasdiffusionslagen (6) verbunden ist, wobei zwischen den Gasdiffusionslagen (6) eine Membran (7) vorgesehen ist.

7. Verwendung der Dichtungsanordnung (1) nach einem der vorherigen Ansprüche in einer PEM-Brennstoffzelle.

## Claims

1. Sealing arrangement (1) for a plate element (2) of a fuel cell, the plate element (2) having a channel structure (3) that is connected to at least one breakthrough (8), the channel structure (3) being partially covered by at least one inserted element (4), the inserted element (4) surrounding the breakthrough and at least one sealing element (5), the inserted element (4) being adhesively connected to the sealing element (5), the inserted element (4) being arranged in a recess in the plate element (2) that is assigned to the breakthrough, and the sealing element (5) being positively connected to the plate element (2) by way of the inserted element (4), **characterized in that** the sealing element (5) is connected to a gas diffusion layer (6) or to a membrane (7).

2. Sealing arrangement according to Claim 1, **characterized in that** the plate element (2) is formed as a bipolar plate.

3. Sealing arrangement according to Claim 1 or 2, **characterized in that** the inserted element (4) is connected to the sealing element (5) by a material bond.

4. Sealing arrangement according to one of Claims 1 to 3, **characterized in that** the sealing element (5) is an injection-moulded part.

5. Sealing arrangement according to one of Claims 1 to 4, **characterized in that** the sealing element (5) is connected to the gas diffusion layer (6) by a material bond.

6. Sealing arrangement according to one of Claims 1 to 5, **characterized in that** the sealing element (5) is connected to two gas diffusion layers (6), a membrane (7) being provided between the gas diffusion layers (6).

7. Use of the sealing arrangement (1) according to one of the preceding claims in a PEM fuel cell.

## Revendications

1. Dispositif d'étanchéité (1) d'un élément de plaque (2) d'une pile à combustible, l'élément de plaque (2) présentant une structure de canaux (3) qui sont reliés à au moins une ouverture (8), la structure de canaux (3) étant recouverte partiellement par au moins un élément d'insertion (4), l'élément d'insertion (4) entourant l'ouverture ainsi qu'au moins un élément d'étanchéité (5), l'élément d'insertion (4) étant relié par adhérence à l'élément d'étanchéité (5), l'élément d'insertion (4) étant disposé dans un évidement de l'élément de plaque (2) qui est associé à l'ouverture, et l'élément d'étanchéité (5) étant relié par engagement par complémentarité de formes à l'élément de plaque (2) par le biais de l'élément d'insertion (4), **caractérisé en ce que** l'élément d'étanchéité (5) est relié à une couche de diffusion de gaz (6) ou à une membrane (7).

2. Dispositif d'étanchéité selon la revendication 1, **caractérisé en ce que** l'élément de plaque (2) est réalisé sous forme de plaque bipolaire.

3. Dispositif d'étanchéité selon la revendication 1 ou 2, **caractérisé en ce que** l'élément d'insertion (4) est relié par liaison de matière à l'élément d'étanchéité (5).

4. Dispositif d'étanchéité selon l'une quelconque des revendications 1 à 3, **caractérisé en ce que** l'élément d'étanchéité (5) est une pièce moulée par injection.

5. Dispositif d'étanchéité selon l'une quelconque des revendications 1 à 4, **caractérisé en ce que** l'élément d'étanchéité (5) est relié par liaison de matière à la couche de diffusion de gaz (6).

6. Dispositif d'étanchéité selon l'une quelconque des revendications 1 à 5, **caractérisé en ce que** l'élément d'étanchéité (5) est relié à deux couches de diffusion de gaz (6), une membrane (7) étant prévue entre les couches de diffusion de gaz (6).

7. Utilisation du dispositif d'étanchéité (1) selon l'une quelconque des revendications précédentes dans une pile à combustible PEM.
